Europäisches Patentamt

European Patent Office

Office européen des brevets

(11) Veröffentlichungsnummer: **0 131 112**
**A2**

(12) # EUROPÄISCHE PATENTANMELDUNG

(21) Anmeldenummer: **84105399.4**

(22) Anmeldetag: **12.05.84**

(51) Int. Cl.⁴: **G 11 B 5/147**
**G 11 B 5/10**

(30) Priorität: **09.07.83 DE 3324824**

(43) Veröffentlichungstag der Anmeldung:
**16.01.85 Patentblatt 85/3**

(84) Benannte Vertragsstaaten:
**AT BE CH DE FR GB IT LI**

(71) Anmelder: **GRUNDIG E.M.V. Elektro-Mechanische Versuchsanstalt Max Grundig & Co. KG.**
**Kurgartenstrasse 37**
**D-8510 Fürth(DE)**

(72) Erfinder: **Mangold, Hans**

**verstorben(DE)**

(72) Erfinder: **Kotter, Karl-Heinz**
**Ackerstrasse 10**
**D-8502 Zirndorf-Weiherhof(DE)**

(72) Erfinder: **Uhde, Dietmar**
**Eibenstrasse 9**
**D-8502 Zirndorf-Weiherhof(DE)**

(54) **Verfahren zur Herstellung eines Magnetkopfes.**

(57) Die Erfindung betrifft ein Verfahren zur Herstellung eines Magnetkopfes gemäß dem Oberbegriff des Patentanspruchs 1, wobei die Kernhälften beidseitig mit Kernträgern aus niedrigschmelzendem Glas (Erweichungspunkt<400°C) durch Erhitzen auf den Erweichungspunkt und durch Zusammenpressen mit hohem Druck (50 bar <P <150 bar) fest verbunden sind.

FIG.1

EP 0 131 112 A2

1

# VERFAHREN ZUR HERSTELLUNG EINES MAGNETKOPFES

## BESCHREIBUNG

Die Erfindung betrifft ein Verfahren zur Herstellung eines Magnetkopfes entsprechend Patentanmeldung P 33 19 437.

Die wesentlichen Einzelteile bilden zwei weichmagnetische Kernhälften aus amorphem Metall, ein unmagnetischer Arbeitsspalt, unmagnetische Kernträger, ein Verbindungskörper zum Zusammenhalt sämtlicher Kopfteile sowie Spulenwindungen.

Bei Videomagnetbandgeräten der Unterhaltungselektronik werden Magnetköpfe mit kleinen Spurbreiten, extrem kleinen Spaltbreiten und insgesamt sehr kleinen Abmessungen, in großer Stückzahl eingesetzt. Das Hauptproblem der Herstellung eines derart kleinen Magnetkopfes in großen Serien besteht darin, ihn wirtschaftlich zu fertigen und dem mit einem Arbeitsspalt ver-

2

sehenen Ringkern eine ausreichende mechanische Stabilität zu geben.

Durch Patentanmeldung P 33 19 437 wurde ein Aufbau und ein dazugehöriges Herstellverfahren für einen Magnetkopf mit amorphmetallischen Kernhälften 1a, 1b bekannt, dessen mechanische Stabilität durch unmagnetische Kernträger 5a, 5b, 6a, 6b, und einen sämtliche Kopfteile vorspannungsfrei zusammenhaltenden Bindekörper 4 erreicht wird. Der unmagnetische Arbeitsspalt 7 trennt die beiden Kernhälften. Die eine Kernhälfte 1b ist im Freiraum 9 mit Spulenwindungen versehen. Die Kernhälften sind mit den Kernträgern durch Verbindungsschichten 2a, 2b, 3a, 3b verbunden. Durch das Überstehen der Kernhälften um eine Höhe h gegenüber ihren Kernträgern entsteht ein Zwischenraum, der mit einem Bindekörper ausgefüllt ist, der alle Kopfteile vorspannungsfrei zusammenhält.

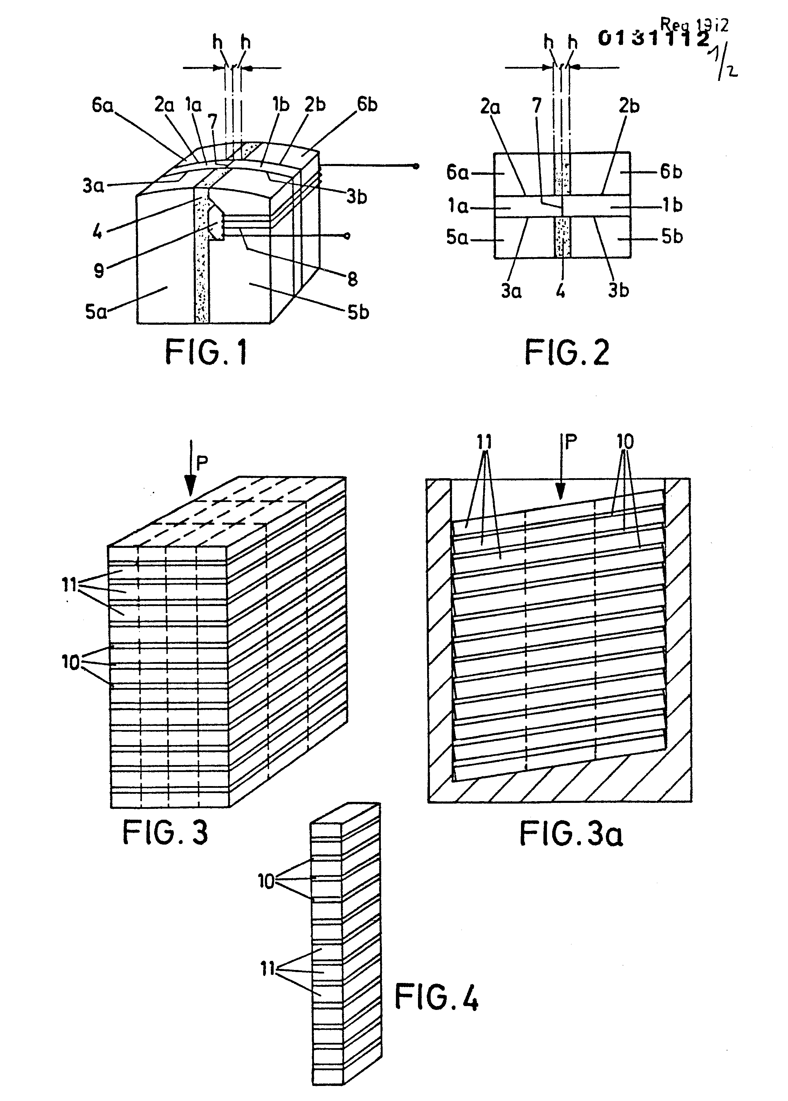

Die durch die Hauptanmeldung P 33 19 437 bekannte Anordnung ist durch Fig. 1 und Fig. 2 dargestellt. Das bei diesem Aufbau angewendete Herstellungsverfahren ist insbesondere dadurch gekennzeichnet, daß der Erweichungspunkt der Verbindungsschichten 2a, 2b, 3a, 3b unter dem Kristallisationspunkt der Kernhälften 1a, 1b und über der Aushärtungstemperatur des Bindekörpers 4 liegt. Der Bindekörper besteht aus einem bei niedriger Temperatur ($< 250$ $^{\circ}$C) aushärtenden Siliconharz oder

3

Siliconharz-Mischprodukt, wobei zur verschleißmäßigen Angleichung bedarfsweise ein Füllmittel beigegeben wird.

Das erfindungsgemäße Verfahren zur Herstellung eines Magnetkopfes mit bekanntem Aufbau beinhaltet eine vorteilhafte Weiterbildung der Hauptanmeldung P 33 19 437, indem die Verbindungsschichten zwischen den Kernträgern und den Kernhälften durch die erfindungsgemäßen Verfahrensschritte entfallen. Die erfindungsgemäßen Verfahrensschritte betreffen insbesondere die Herstellung von fest verbundenen Stapeln, als Voraussetzung für die Herstellung von Halbblöcken, Blöcken und Einzelköpfen.

Durch vorteilhafte Weiterbildung der Verfahrensschritte der Hauptanmeldung wird zunächst ein Stapel erfindungsgemäß durch wechselweises Schichten von Glasplättchen 11 und amorphmetallischen Folien 10, bei Wegfall der Verbindungsschichten 2a, 2b, 3a, 3b gegenüber der Hauptanmeldung, aufgebaut. Die Dicke der amorphmetallischen Folien entspricht der vorgesehenen Spaltlänge.

Als zweiter erfindungsgemäßer Verfahrensschritt wird der Stapel erhitzt und beim Erreichen der vorgesehenen Maximaltemperatur, die dem Erweichungspunkt der Glasplättchen entspricht, einem hohen Druck (50 bar < P < 150 bar ) ausgesetzt. Der Erweichungspunkt der Glas-

4

plättchen liegt dabei unter dem Kristallisationspunkt der amorphmetallischen Folien.

Als dritten Verfahrensschritt läßt man die Temperatur abklingen, wobei der Druck noch in der ersten Abklingphase entfernt wird.

Abschließend wird der Stapel auf Normaltemperatur gebracht.

Durch das beschriebene erfindungsgemäße Verfahren wird der Stapel zu einer festen, mechanisch stabilen Einheit.

Gemäß einer Erweiterung des Erfindungsgedankens werden die amorphmetallischen Folien vor dem Zusammenpressen mit einer Metalloxidschicht, die als Haftvermittler wirkt, versehen.

Gemäß einer weiteren Ausweitung des Erfindungsgedankens werden die Einzelteile,die den Stapel ergeben, in der Preßform schräg gestapelt und mit einem schrägen Stempel gegen eine schräge Anlagefläche gedrückt, so daß sich ein Stapel mit rhomboidförmigem Querschnitt ergibt. Durch Zerlegen des Stapels in Halbblöcke ergeben sich dann ebenfalls Halbblöcke mit rhomboidförmigem Querschnitt. Damit wird ggf. ein von 90$^{\circ}$ abweichender Azimut-Winkel des Arbeitsspaltes kompensiert.

Der Stapel wird sodann entsprechend der Hauptanmeldung in Halbblöcke zerteilt, diese nach Bearbeitung zu Gesamtblöcken zusammengefügt, und zu Einzelköpfen verarbeitet.

Als Folge des erfindungsgemäßen Verfahrens ergibt sich ein mechanisch stabiler, in großen Serien wirtschaftlich herstellbarer Magnetkopf.

Einzelheiten der Erfindung werden im folgenden anhand der Zeichnungen erläutert. Es zeigt:

Fig. 1    einen Magnetkopf zur Aufzeichnung und/oder Wiedergabe schmaler Spuren,

Fig. 2    eine Kopfspiegel-Draufsicht,

Fig. 3    einen wechselweise geschichteten geraden Stapel,

Fig. 3a    einen wechselweise geschichteten schrägen Stapel,

Fig. 4    einen Halbblock vor der Bearbeitung,

Fig. 5    zwei bearbeitete Halbblöcke,

6

Fig. 6      einen Gesamtblock vor der Endbearbeitung,

Fig. 7      ein Druck- und Temperatur-
            Diagramm für den Preßvorgang.

Figur 1 zeigt den Aufbau des Magnetkopfes zur Anwendung des erfindungsgemäßen Verfahrens. Die beiden Kernhälften 1a, 1b aus amorphem weichmagnetischem Metall sind durch einen unmagnetischen Arbeitsspalt 7 getrennt. Der Zusammenhalt sämtlicher Kopfteile wird durch den Verbindungskörper 4 bewirkt. Eine Kernhälfte 1b ist in ihrem Freiraum 9 mit Spulenwindungen 8 versehen. Die Kernhälften bestehen aus weichmagnetischem amorphem Metall insbesondere auf Co.-Basis. Werkstoffe dieser Art haben ausgezeichnete magnetische Werte ($\mu_a$, $H_c$, $B_s$) und eine extrem hohe Verschleißfestigkeit ($HV \approx 1000$). Sie sind mechanisch härter als Ferrit oder Alfesil (Sendust). Amorphes Metall wird in Folienform geliefert, wobei die Foliendicke bereits der Dicke der Kernhälften entspricht, so daß eine Nacharbeit nicht erforderlich ist. Die Kernträger 5a, 5b, 6a, 6b bestehen erfindungsgemäß aus Glas oder einem ähnlich gearteten Werkstoff.

Die wichtigsten Verfahrensschritte werden an Figur 3 bis Figur 6 erläutert.

7

Figur 3 zeigt einen aus Glasplättchen 11 und amorphmetallischen Folien 10 wechselweise geschichteten Stapel. Der Stapel wird durch Anwendung von Temperatur und Druck zu einer festen mechanischen Einheit verbunden.

Figur 3a zeigt eine Preßform mit schrägem Boden und Stempel, in dem die Einzelteile schräg gestapelt sind.

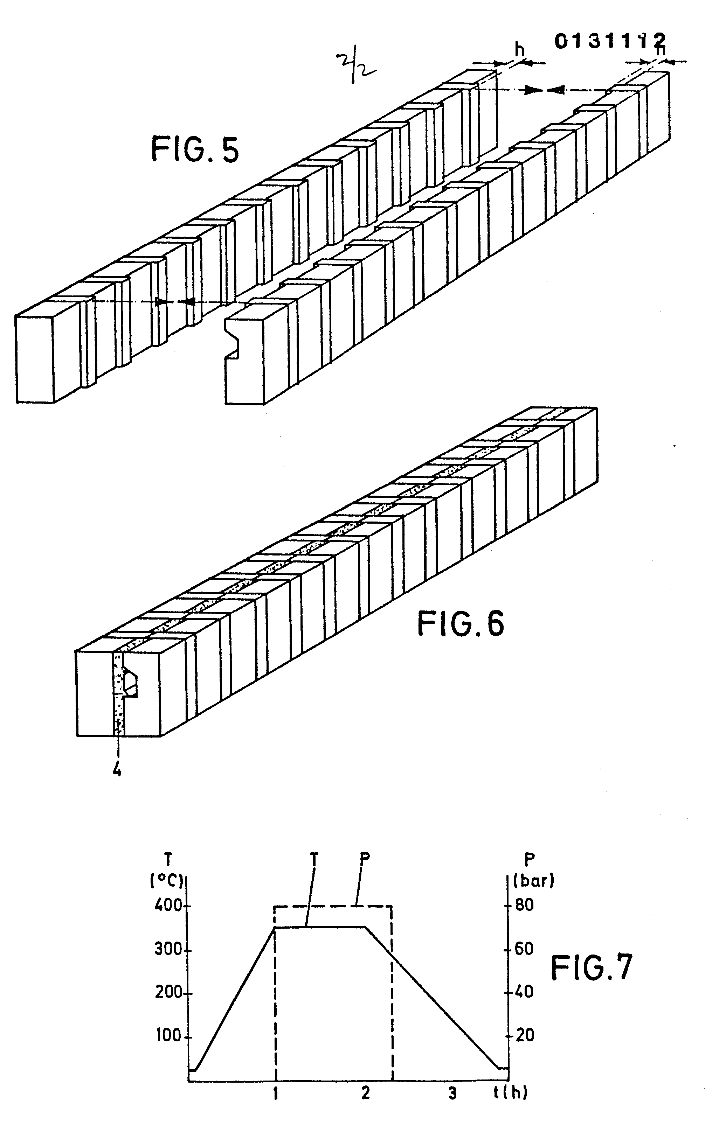

Figur 7 zeigt ein Beispiel für den zeitlichen Temperatur- und Druckverlauf als Diagramm für den Preßvorgang eines Stapels. Der Erweichungspunkt der Glas-plättchen liegt bei 350 $^{o}$C, während der angewendete Druck P = 80 bar beträgt.

Der verfestigte Stapel wird entsprechend den angedeuteten Strichlinien von Figur 3 bzw. 3a in Halbblöcke zerlegt. In den dargestellten Beispielen entstehen zwölf Halbblöcke.

Figur 4 zeigt einen unbearbeiteten gerade gestapelten Halbblock, während Figur 5 und Figur 6 die Weiterverarbeitung zu Gesamtblöcken und Einzelköpfen gemäß der Hauptanmeldung veranschaulicht.

Entsprechend einem weiteren nicht dargestellten erfin-dungsgemäßen Verfahrensschritt werden die amorphmetal-lischen Folien vor dem Zusammenpressen mit einer Me-talloxidschicht, z.B. $TiO_2$, als Haftvermittler versehen.

8

# VERFAHREN ZUR HERSTELLUNG EINES MAGNETKOPFES

## PATENTANSPRÜCHE

1. Verfahren zur Herstellung eines Magnetkopfes entsprechend Patentanmeldung P 33 19 437, bei welchem zwei aus amorphem weichmagnetischem Metall bestehende, durch einen unmagnetischen Arbeitsspalt getrennte Kernhälften, die mit Kernträgern aus Glas verbunden sind, wobei die Kernhälften gegenüber ihren Kernträgern um eine Höhe h überstehen und der dadurch gebildete Zwischenraum mit einem Bindekörper ausgefüllt ist, der alle Kopfteile vorspannungsfrei zusammenhält, und wobei mindestens eine Kernhälfte mit Spulenwindungen versehen ist, d a d u r c h  g e k e n n z e i c h n e t , daß ein aus wechselweise geschichteten niedrigschmelzenden (Erweichungspunkt < 400 $^{o}$C) Glasplättchen (11) und amorphmetallischen Folien (10) bestehender Stapel durch Erhitzen auf den Erweichungspunkt der Glasplättchen und durch Zusammenpressen mit hohem Druck (50 bar< P <150 bar) unter Anwendung eines spezifischen Temperatur-$(T = f_1(t))$

9

und Druckdiagramms ($P = f_2(t)$) fest verbunden wird und daß daraus Halbblöcke hergestellt werden, die danach zu Gesamtblöcken zusammengefügt und zu Einzelköpfen verarbeitet werden.

2. Verfahren zur Herstellung eines Magnetkopfes nach Anspruch 1, d a d u r c h   g e k e n n - z e i c h n e t ,   daß die amorphmetallischen Folien (10) vor dem Zusammenpressen des Stapels mit einer Metalloxidschicht als Haftvermittler versehen sind.

Reg 1912
0131112
1/2

FIG.1

FIG.2

FIG.3

FIG.3a

FIG.4

2/2

0131112

FIG.5

FIG.6

FIG.7